# EUROPÄISCHE PATENTANMELDUNG

(11) **EP 2 899 409 A2**
(43) Veröffentlichungstag der Anmeldung: **29.07.2015**
(21) Anmeldenummer: 14198089.6
(22) Anmeldetag: 16.12.2014
(51) Int. Cl.: F15B 7/06

(54) **Messadapter für eine hydraulische Strecke, vorzugsweise für eine Kupplungsbetätigungseinrichtung eines Kraftfahrzeuges**

(30) Priorität: 24.01.2014 DE 102014201269; 31.03.2014 DE 102014206050
(71) Anmelder: Schaeffler Technologies AG & Co. KG, 91074 Herzogenaurach (DE)
(72) Erfinder: Glebov, Alexander, 77815 Bühl (DE); Ortmann, Simon, 77866 Rheinau-Linx (DE)

(57) **Zusammenfassung**

Die Erfindung betrifft einen Messadapter für eine hydraulische Strecke, vorzugsweise für eine Kupplungsbetätigungseinrichtung eines Kraftfahrzeuges. Bei einem Messadapter, bei welchem ein Wegmesssystem kostengünstig in der hydraulischen Strecke zu realisieren ist, weist ein zylinderähnliches Gehäuse (11) in axialer Richtung zwei Anschlüsse zur Integration in eine Druckleitung (8) auf, wobei im Inneren des Gehäuses ein, von einer hydraulischen Flüssigkeit betätigtes, axial bewegliches Betätigungselement (14) angeordnet ist, welches mit einer Sensoreinheit (22), die außen an oder in dem Gehäuse angeordnet ist, zur Wegbestimmung des Betätigungselementes in einer Wirkverbindung steht.

## Beschreibung

Die Erfindung betrifft einen Messadapter für eine hydraulische Strecke, vorzugsweise für eine Kupplungsbetätigungseinrichtung eines Kraftfahrzeuges sowie eine hydraulische Strecke.

In hydraulischen Kupplungsausrücksystemen, die in Kraftfahrzeugen Einsatz finden, werden Linearwegmesssysteme eingesetzt, um eine Position eines Kolbens entweder des Geberzylinders oder eines Nehmerzylinders zu erfassen, um den Betätigungszustand der Kupplung des Kraftfahrzeuges bestimmen zu können. Das Linearwegmesssystem umfasst ein Sensorsystem, das aus einer induktiven Sensoreinheit mit einem elektrisch leitfähigen Target als Sensorbestandteil besteht. Alternativ ist es aber auch möglich, dass als Sensorsystem ein Hall-Sensor benutzt wird, welches als Sensorbestandteil einen Dauermagneten umfasst, der am Kolben positioniert ist. Durch die Bewegung des Kolbens wird der Sensorbestandteil in einem von der Sensoreinheit aufgespannten Magnetfeld bewegt oder spannt selbst ein Magnetfeld auf, welches an der Sensoreinheit vorbeigeführt wird, wodurch sich ein Sensorsignal des Sensorsystems verändert, was Rückschlüsse auf den Betätigungszustand der Kupplung zulässt.

Der Einbau eines solchen Linearwegmesssystems in einen Geberzylinder oder einen Nehmerzylinder ist aufgrund eines sehr komplizierter Geometrie sehr aufwändig. Die Nachteile liegen dabei beim Nehmerzylinder in den extremen Umgebungsbedingungen in der Kupplungsglocke (hohe Temperaturen), wodurch eine sehr resistente Sensorik verwendet werden muss. Beim Einbau in einen Geberzylinder liegt ein sehr komplexer Aufbau vor, was den Einbau des Sensorsystems sehr kompliziert gestaltet. Soll ein Handschaltgetriebe automatisiert werden, so muss ein Standardgeber durch ein spezielles Bauteil ausgetauscht werden, was hohe Kosten verursacht.

Der Erfindung liegt somit die Aufgabe zugrunde, eine hydraulische Strecke, vorzugsweise ein Kupplungsbetätigungssystem, anzugeben, bei welcher eine zuverlässige Messung des Ausrückweges der Kupplung bei reduzierten Herstellungskosten möglich ist.

Erfindungsgemäß wird die Aufgabe dadurch gelöst, dass ein zylinderähnliches Gehäuse in axialer Richtung zwei Anschlüsse zur Integration in eine Druckleitung aufweist, wobei im Inneren des Gehäuses ein von einer hydraulischen Flüssigkeit betätigtes Betätigungselement angeordnet ist, welches eine Bewegung einer Primärseite der hydraulischen Strecke in eine Bewegung einer Sekundärseite der hydraulischen Strecke umsetzt und das Betätigungselement mit einer Sensoreinheit, die außen an oder in dem Gehäuse angeordnet ist, zur Wegbestimmung des Betätigungselementes in einer Wirkverbindung steht. Dies hat den Vorteil, dass durch diesen zusätzlichen Messadapter innerhalb der hydraulischen Strecke zwischen einem Geberzylinder und einem Nehmerzylinder der Ausrückweg zuverlässig zu messen ist, ohne den Geber- bzw. den Nehmerzylinder verändern zu müssen. Zusätzlich ist gewährleistet, dass der Messadapter kostengünstig realisierbar ist und Standardkomponenten des Geber- bzw. Nehmerzylinders verwendet werden können. Darüber hinaus lässt sich ein solcher Messadapter einfach zur Automatisierung eines Handschaltgetriebes einsetzen.

Vorteilhafterweise trägt das Betätigungselement einen Dauermagneten, welcher mit der, mindestens einen Hall-Sensor aufweisenden Sensoreinheit zur Wegbestimmung des Betätigungselementes zusammenwirkt. Somit können die an sich zur Bestimmung des Ausrückweges bekannten Messprinzipien auch in einem solchen Messadapter eingesetzt werden, der in die Druckleitung, welche Geber- und Nehmerzylinder miteinander verbindet, integriert wird.

Alternativ trägt das Betätigungselement ein elektrisch leitfähiges Target, welches mit der induktiven Sensoreinheit zur Wegbestimmung des Betätigungselementes zusammenwirkt. Insbesondere bei der Verwendung eines induktiven Messprinzips ist eine Platzierung des Messadapters im Motorraum von Vorteil, wo ausreichend Bauraum zur Installation und zum Abgleich des induktiven Messsystems vorhanden ist.

In einer Ausgestaltung weist das Gehäuse zwei unterschiedliche Innendurchmesser auf, welche Dichtdurchmesser zur Ausbildung von zwei, durch das Betätigungselement getrennten Druckräumen darstellen. Diese zwei Druckräume, von denen einer über die Druckleitung mit dem Geberzylinder und der andere mit dem Nehmerzylinder verbunden ist, erlauben das Eindringen der hydraulischen Flüssigkeit in den Messadapter und somit die Betätigung des Betätigungselementes und die Druckübertragung auf den Nehmerzylinder. Die Ausbildung des Gehäuses mit zwei verschiedenen Innendurchmessern erlaubt darüber hinaus eine einfachere Herstellung des Messadapters, da unterschiedliche Druckflächen vorhanden sind und somit die Druckübersetzung zwischen Geber- und Nehmerzylinder einfach realisiert werden kann.

In einer Variante ist die Länge des Betätigungselementes größer als ein Hub eines Ausrückvorganges der hydraulischen Strecke. Damit wird sichergestellt, dass der Hub der hydraulischen Strecke vollständig von dem Betätigungselement nachvollzogen werden kann und somit eine korrekte Angabe der Stellung der Kupplung im Kraftfahrzeug möglich ist.

In einer Ausführungsform ist das Betätigungselement als Kolben ausgebildet, welcher gegenüber jedem Druckraum mit einem Dichtelement versehen ist. Diese Dichtelemente wirken dynamisch und verhindern ein Eindringen der hydraulischen Flüssigkeit in den Kolben selbst. Somit wird gewährleistet, dass der Kolben durch den, durch die hydraulische Flüssigkeit übertragenen Druck innerhalb des Messadapters bewegt wird, wobei neben der Wegmessung gleichzeitig der Druck auf den Nehmerzylinder zur Betätigung der Kupplung übertragen wird. Druckunterschiede werden dabei zuverlässig unterbunden.

In einer Ausgestaltung ist der, einen Eingang für das hydraulische Medium darstellende Anschluss als Verschlussbauteil ausgebildet, welches einen axial in den ersten Druckraum weisenden Anschlag zur Einstellung einer Nullposition des Betätigungselementes aufweist. Somit wird gewährleistet, dass die Sensoreinheit eine korrekte, reproduzierbare Wegmessung vornehmen kann.

In einer weiteren Variante weist das Gehäuse eine Schnüffelbohrung auf, welche bei Einnahme der Nullposition durch das Betätigungselement mit dem zweiten Druckraum verbunden ist. Diese Anordnung gewährleistet, dass die durch die hydraulische Flüssigkeit ausgelöste Positionsänderung der Kupplung zuverlässig auf den Nehmerzylinder übertragen wird.

In einer Ausgestaltung greift an dem Betätigungselement in einer zur Strömungsrichtung der hydraulischen Flüssigkeit entgegengesetzten Richtung ein Vorspannelement an. Dieses Vorspannelement erlaubt ein zuverlässiges Überfahren der Schnüffelbohrung.

Vorteilhafterweise umfasst das Betätigungselement zwei ineinandergreifende, axial bewegliche Kolben, wodurch sich das Betätigungselement besonders einfach herstellen lässt.

In einer Ausführungsform weist der, von der Primärseite der hydraulischen Strecke betätigte Primärkolben einen größeren Durchmesser auf, als der, die Sekundärseite der hydraulischen Strecke betätigende Sekundärkolben, wodurch der Sekundärkolben von dem Primärkolben umfasst ist. Dies hat den Vorteil, dass die Druckübersetzung durch die unterschiedlichen Durchmesser des Primär- und Sekundärkolbens und somit das vorgesehene Verschiebevolumen der Hydraulikflüssigkeit genau einstellbar sind.

Vorteilhafterweise ist die Sensoreinheit am Gehäuse gegenüber dem Primärkolben zu dessen Wegbestimmung angeordnet. Ein solcher Messadapter erlaubt nicht nur die genauer Wegbestimmung des Primärkolbens sondern auch eine zuverlässige Einstellung des Druckes, welcher zwischen Primärseite und Sekundarseite der hydraulischen Strecke übertragen werden soll.

Eine Weiterbildung der Erfindung betrifft eine hydraulische Strecke, vorzugsweise ein Kupplungsbetätigungssystem, bei welcher ein Geberzylinder über eine Druckleitung mit einem Nehmerzylinder verbunden ist. Bei einer hydraulischen Strecke, bei welcher die Messung des Ausrückweges der Kupplung unter Verwendung von Standardbauteilen realisiert werden kann, ist in die Druckleitung ein Messadapter zur Bestimmung eines Ausrückweges der hydraulischen Strecke nach mindestens einem der in dieser Schutzrechtsanmeldung erläuterten Merkmale integriert. Dies hat den Vorteil, dass außer der Hydraulikleitung, in welcher der Messadapter eingesetzt werden muss, keine anderen Bauteile der hydraulischen Strecke verändert werden müssen. Somit erhält man eine Nachrüstlösung für eine Automatisierung eines Getriebes. Diese Lösung ist ebenfalls umsetzbar, wenn eine Wegmesssensorik in einen Handschalter implementiert werden soll.

Die Erfindung lässt zahlreiche Ausführungsformen zu. Eine davon soll anhand der in der Zeichnung dargestellten Figuren näher erläutert werden.

Es zeigt:
- Figur 1:: Prinzipdarstellung eines hydraulischen Kupplungsbetätigungssystems
- Figur 2:: ein erstes Ausführungsbeispiel des erfindungsgemäßen Messadapters in einer ersten Position des Betätigungselementes,
- Figur 3:: das erste Ausführungsbeispiel des erfindungsgemäßen Messadapters in einer zweiten Position des Betätigungselementes,
- Figur 4:: ein zweites Ausführungsbeispiel des erfindungsgemäßen Messadapters in einer ersten Position des Betätigungselementes,
- Figur 5:: das zweite Ausführungsbeispiel des erfindungsgemäßen Messadapters in einer zweiten Position des Betätigungselementes.

Gleiche Merkmale sind mit gleichen Bezugszeichen gekennzeichnet.

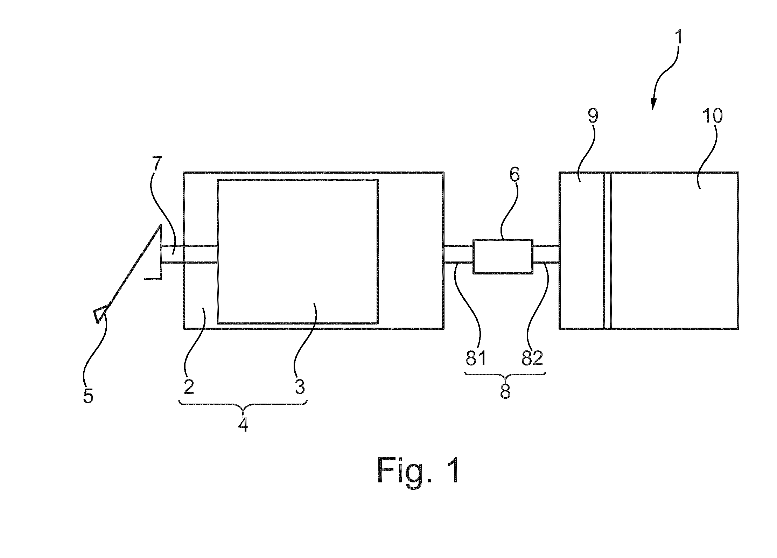

In Figur 1 ist ein hydraulisches Kupplungsbetätigungssystem 1 dargestellt, wie es in Kraftfahrzeugen zum Einsatz kommt. Ein solches Kupplungsbetätigungssystem 1 weist ein hydraulisches Betätigungssystem in Form eines Geberzylinders 4 auf, welcher einen als Gehäuse 2 ausgebildeten Zylinder umfasst, in dem ein Kolben 3 axial beweglich gelagert ist. Der Kolben 3 wird von einem Kupplungspedal 5 betätigt, welches an einer Kolbenstange 7 angreift. Über eine Druckleitung 8, in welcher eine hydraulische Flüssigkeit geführt wird, ist der Geberzylinder 4 mit einem Nehmerzylinder 9 verbunden, welcher eine Kupplung 10 betätigt. Das Verstellen der Position der Kupplung 10 erfolgt aufgrund des Antriebes des Kolbens 3 durch das Kupplungspedal 5. Der Geberzylinder 4 und die Kupplung 10 mit dem Nehmerzylinder 9 sind dabei räumlich getrennt im Kraftfahrzeug angeordnet. In die Druckleitung 8 ist ein Messadapter 6 zur Bestimmung des Ausrückweges der Kupplung 10 integriert.

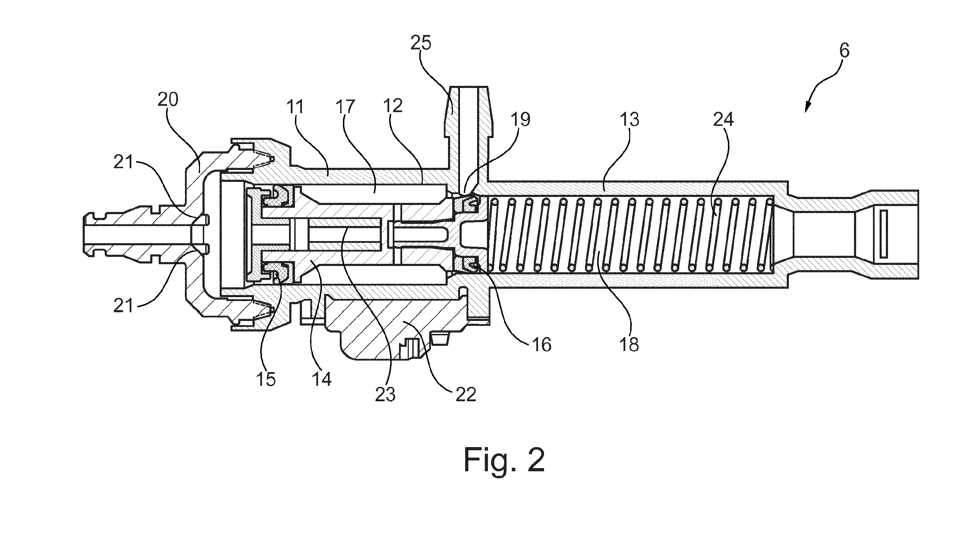

Eine genauere Beschreibung dieses Messadapters 6 soll anhand von Figur 2 erfolgen. Der Messadapter 6 besteht aus einem Gehäuse 11, welches zwei Innendurchmesser 12, 13 aufweist. Durch diese unterschiedlichen Innendurchmesser 12, 13 erfolgt eine genaue Anpassung der Druckverhältnisse des Geberzylinders 4 zum Nehmerzylinder 9. Der Messadapter 6 teilt dabei die Druckleitung 8 in zwei Teildruckleitungen 81, 82. Im Inneren des Gehäuses 11 ist ein Kolben 14 geführt, welcher an jedem Ende mit einem Dichtelement 15, 16 abgedichtet ist. Der Kolben 14 bildet dabei mit einem ersten Anschluss der ersten Teildruckleitung 81, welche vom Geberzylinder 4 ausgeht, einen ersten Druckraum 17, wohingegen die zweite Dichtung 16 in Richtung Nehmerzylinder 9 einen zweiten Druckraum 18 bildet.

Eine Schnüffelbohrung 19 ist am zweiten Druckraum 18 so ausgebildet, dass diese an den ersten Druckraum 17 angrenzt. Diese Schnüffelbohrung dient zum Entlüften und Befüllen des Nehmerzylinders 9 mit Fluid über dessen Lebensdauer. Ein Verschlussbauteil 20 ist als Anschluss des Gehäuses 11 von Seiten des Geberzylinders 4 vorgesehen. Dieses Verschlussbauteil 20 ist mittels Verschweißen mit dem Gehäuse 11 verbunden. Im Inneren des Verschlussbauteils 20 ragen axial in Richtung des Kolbens 14 zwei Anschläge 21, welche bei der Berührung des Kolbens 14 die Nullposition eines Wegmesssystems 22 bilden, das außen am Gehäuse 11 angeordnet ist. Bei diesem Wegmesssystem 22 handelt es sich insbesondere um einen Hall-Sensor, welcher mit einem vom Kolben 14 geführten Dauermagneten 23 in einer Wirkverbindung steht.

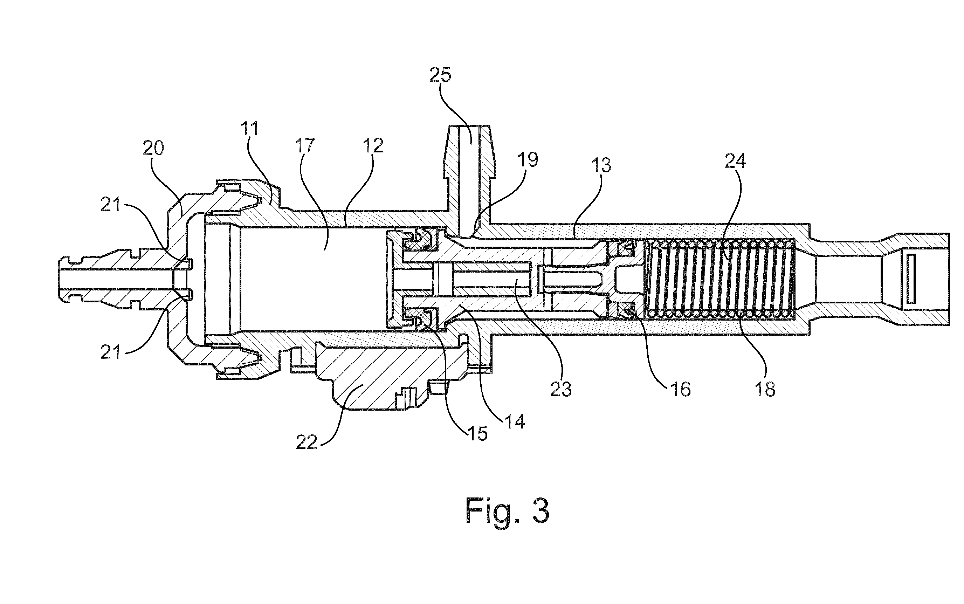

Bei einem inaktiven Kupplungsbetätigungssystem 1 liegt der Kolben 14 an den Anschlägen 21 an, so dass das Wegmesssystem 22 eine Nullposition registrieren kann, von welcher aus ein Ausrückweg des Kupplungsbetätigungssystems 1 bestimmt werden kann. Um diese Nullposition zu fixieren, ist der Kolben 14 in Richtung des Geberzylinders 4 über eine Vorlastfeder 24 gegen die Anschläge 21 vorgespannt. Wird der Geberzylinder 4 durch das Kupplungspedal 5 betätigt, wird aus dem Geberzylinder 4 hydraulische Flüssigkeit über die Teildruckleitung 81 in den Messadapter 6 gedrückt (Figur 3). Dadurch bewegt sich der Kolben 14 mit dem Dauermagneten 23, was von dem Wegmesssystem 22 detektiert wird. Dabei überfährt der Kolben 15 die Schnüffelbohrung 19 und unterbricht die Verbindung des Nehmerzylinders 9 mit der Schnüffelbohrung 19, die über eine Low-Pressure-Pipe 25 zum einem nicht weiter dargestellten Nachlaufbehälter der Bremsflüssigkeit führt. Durch die Bewegung des Kolbens 14 wird die hydraulische Flüssigkeit, welche sich in der Zeiten Teildruckleitung 82 befindet, in Richtung des Nehmerzylinders 9 bewegt, wodurch die Kupplung 10 betätigt wird.

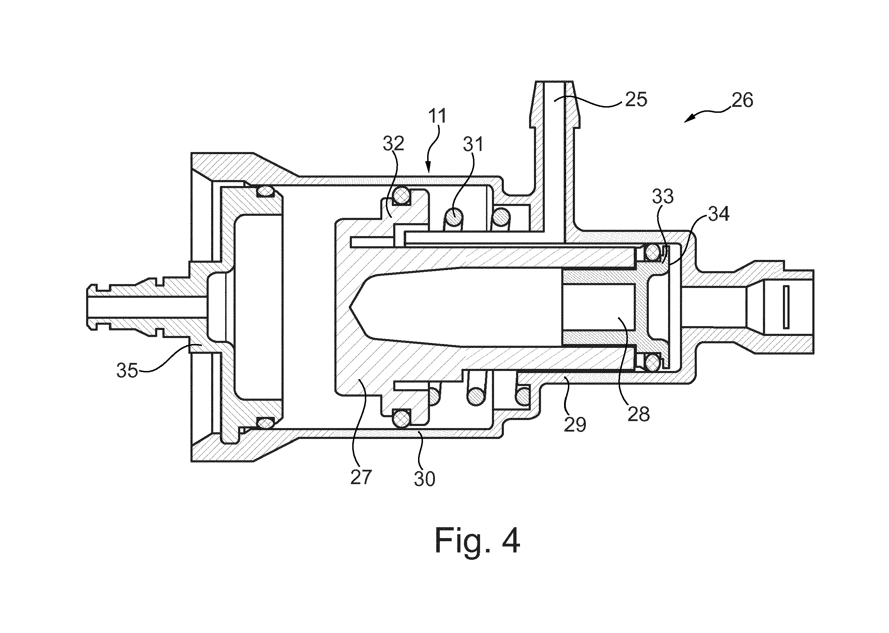

In Figur 4 ist ein zweites Ausführungsbeispiel des erfindungsgemäßen Messadapters 26 dargestellt, bei welchem innerhalb des Gehäuses 11 eine Primärkolben 27 und ein Sekundärkolben 28 beweglich zueinander gelagert sind. Der Primärkolben 27 weist dabei einen größeren Durchmesser auf als der Sekundärkolben 28, welcher innerhalb des Primärkolbens 27 an dessen Innenwand gleitend geführt ist. Der den Sekundärkolben 28 tragende Primärkolben 27 ist innerhalb eines zweiten Gehäuseteiles 29 des Gehäuses 11 beweglich gelagert, welches mit der Teildruckleitung 82 verbunden ist und welches einen kleineren Durchmesser aufweist als ein erstes Gehäuseteil 30, das mit der ersten Teildruckleitung 81 in Verbindung steht. Das zweite Gehäuseteil 29 ragt dabei in das erste Gehäuseteil 30 hinein und ist von einer Vorlastfeder 31 umgeben, an welcher eine radial nach außen weisende Umrandung 32 des Primärkolbens 27 angreift.

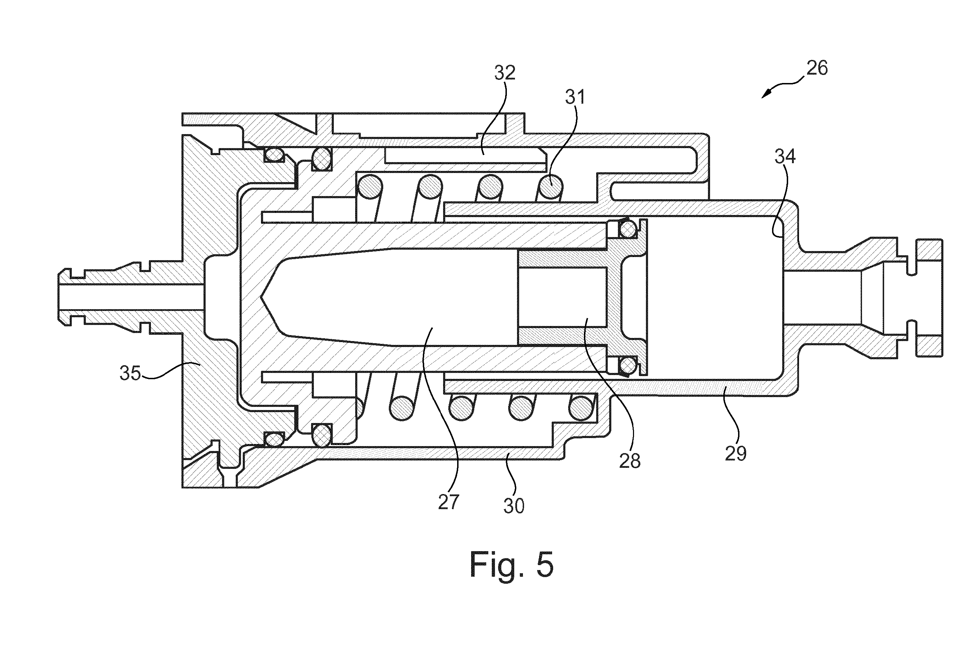

Wird der Geberzylinder 4 durch das Kupplungspedal 5 betätigt, wird aus dem Geberzylinder 4 hydraulische Flüssigkeit über die Teildruckleitung 81 in den Messadapter 26 gedrückt. Dadurch bewegt sich der Primärkolben 27 und wird mit seiner Umrandung 32 gegen die Vorlastfeder 31 gedrückt. Durch das Einströmen weiterer Hydraulikflüssigkeit drückt der Primärkolben 27 gegen einen Kragen 33 des Sekundärkolbens 28, dessen Bewegungsfreiheit durch eine, der zweiten Teilleitung 82 gegenüberliegende Stirnseite 34 des zweiten Gehäuseteiles 29 begrenzt ist. Dadurch wird die Hydraulikflüssigkeit vom Geberzylinder 4 in den Nehmerzylinder 9 gedrückt, wodurch gleichzeitig die Kupplung 10 betätigt wird. Figur 5 zeigt den Messadapter 26 in bei einem inaktiven Kupplungssystem, bei welchem der Primärkolben 27 am Konnektor 35 der Primärseite der hydraulischen Strecke anliegt, welche gleichzeitig den Nullpunkt für das Wegmesssystem darstellt.

Der vom Geberzylinder 4 in den Nehmerzylinder 9 übersetzte Druck hängt von den unterschiedlichen Flächenverhältnissen des Primär- und des Sekundärkolbens 27, 28 ab. Ausgehend von einem vorgegebenen Verschiebevolumen der Hydraulikflüssigkeit wird auf der Seite des Sekundärkolbens 28 ein bestimmter Druck ermittelt, aus welchem auf einen Durchmesser des Primärkolbens 27 geschlossen wird, um eine gewünschte Drückübersetzung zu erhalten. Die Bewegung des Primärkolbens 27 wird ebenfalls von einem nicht weiter dargestellten Wegmesssystem überwacht, welches in der schon beschriebenen Art und Weise am Gehäuse 11 angeordnet ist und mit einem am Primärkolben 27 angeordneten Dauermagneten in einer Wirkverbindung steht.

Durch das vorgeschlagene Lösungsprinzip wird die hydraulische Strecke in zwei Teile geteilt: die Strecke Geberzylinder 4 bis Messadapter 6, 26 und die Strecke Messadapter 6, 26 bis zum Nehmerzylinder 9. Das bedeutet, dass im Fahrzeug beide Strecke befüllt werden müssen. Durch den Messadapter 6, 26 ist ohne Änderungen an bestehenden Bauteilen und ohne großen Aufwand eine Integration eines linearen Wegmesssystems in einem Kupplungsbetätigungssystem möglich.

### Bezugszeichenliste

- 1: Kupplungsbetätigungssystem
- 2: Gehäuse
- 3: Kolben
- 4: Geberzylinder
- 5: Kupplungspedal
- 6: Messadapter
- 7: Kolbenstange
- 8: Druckleitung
- 81: Teildruckleitung
- 82: Teildruckleitung
- 9: Nehmerzylinder
- 10: Kupplung
- 11: Gehäuse
- 12: Innendurchmesser
- 13: Innendurchmesser
- 14: Kolben
- 15: Dichtelement
- 16: Dichtelement
- 17: Druckraum
- 18: Druckraum
- 19: Schnüffelbohrung
- 20: Verschlussbauteil
- 21: Anschlag
- 22: Wegmesssystem
- 23: Dauermagnet
- 24: Vorlastfeder
- 25: Low-Pressure-Pipe
- 26: Messadapter
- 27: Primärkolben
- 28: Sekundärkolben
- 29: Gehäuseteil
- 30: Gehäuseteil
- 31: Vorlastfeder
- 32: Umrandung des Primärkolbens
- 33: Kragen des Sekundärkolbens
- 34: Stirnseite des zweiten Gehäuseteils
- 35: Konnektor

## Patentansprüche

1. Messadapter für eine hydraulische Strecke, vorzugsweise für eine Kupplungsbetätigungseinrichtung eines Kraftfahrzeuges, **dadurch gekennzeichnet, dass** ein zylinderähnliches Gehäuse (11) in axialer Richtung zwei Anschlüsse zur Integration in eine Druckleitung (8) aufweist, wobei im Inneren des Gehäuses (11) ein von einer hydraulischen Flüssigkeit betätigtes, axial bewegliches Betätigungselement (14) angeordnet ist, welches eine Bewegung einer Primärseite der hydraulischen Strecke in eine Bewegung einer Sekundärseite der hydraulischen Strecke umsetzt und das Betätigungselement mit einer Sensoreinheit (22), die in dem Gehäuse (11) oder außen an dem Gehäuse (11) angeordnet ist, zur Wegbestimmung des Betätigungselementes (14) in einer Wirkverbindung steht.

2. Messadapter nach Anspruch 1, **dadurch gekennzeichnet, dass** das Betätigungselement (14) einen Dauermagnet (23) trägt, welcher mit der, mindestens einen Hall-Sensor aufweisenden Sensoreinheit (22) zur Wegbestimmung des Betätigungselementes (14) zusammenwirkt.

3. Messadapter nach Anspruch 1, **dadurch gekennzeichnet, dass** das Betätigungselement (14) ein elektrisch leitfähiges Target trägt, welches mit der induktiven Sensoreinheit (22) zur Wegbestimmung des Betätigungselementes zusammenwirkt.

4. Messadapter nach mindestens einem der vorhergehenden Ansprüche, **dadurch gekennzeichnet, dass** das Gehäuse (11) zwei unterschiedliche Innendurchmesser (12, 13) aufweist, welche Dichtdurchmesser zur Ausbildung von zwei, durch das Betätigungselement (14) getrennten Druckräumen (17, 18) darstellen.

5. Messadapter nach mindestens einem der vorhergehenden Ansprüche, **dadurch gekennzeichnet, dass** die Länge des Betätigungselementes (14) größer ist als ein Hub eines Ausrückvorganges der hydraulischen Strecke.

6. Messadapter nach mindestens einem der vorhergehenden Ansprüche, **dadurch gekennzeichnet, dass** das Betätigungselement als Kolben (14) ausgebildet ist, welcher gegenüber jedem Druckraum (17, 18) mit einem Dichtelement (15, 16) abgedichtet ist.

7. Messadapter nach mindestens einem der vorhergehenden Ansprüche, **dadurch gekennzeichnet, dass** der, einen Eingang für die hydraulische Flüssigkeit darstellende Anschluss als Verschlussbauteil (20) ausgebildet ist, welches einen axial, in den ersten Druckraum (17) weisenden Anschlag (21) zur Einstellung einer Nullposition des Betätigungselementes (14) aufweist.

8. Messadapter nach mindestens einem der vorhergehenden Ansprüche, **dadurch gekennzeichnet, dass** das Gehäuse (11) eine Schnüffelbohrung (19) aufweist, welche bei Einnahme der Nullposition durch das Betätigungselement (14) mit dem zweiten Druckraum (18) verbunden ist.

9. Messadapter nach mindestens einem der vorhergehenden Ansprüche, **dadurch gekennzeichnet, dass** an dem Betätigungselement (14) in zur Strömungsrichtung der hydraulischen Flüssigkeit entgegengesetzter Richtung ein Vorspannelement (24) angreift.

10. Messadapter nach Anspruch 1, 2 oder 3 **dadurch gekennzeichnet, dass** das Betätigungselement (14) zwei ineinandergreifende, axial bewegliche Kolben (27, 28) umfasst.

11. Messadapter nach Anspruch 10 **dadurch gekennzeichnet, dass** der, von der Primärseite der hydraulischen Strecke betätigte Primärkolben (27) einen größeren Durchmesser aufweist, als der, die Sekundärseite der hydraulischen Strecke betätigende Sekundärkolben (28), wodurch der Sekundärkolben (28) von dem Primärkolben (27) umfasst ist.

12. Messadapter nach Anspruch 10 oder 11 **dadurch gekennzeichnet, dass** die Sensoreinheit am Gehäuse (11) gegenüber dem Primärkolben (27) zu dessen Wegbestimmung angeordnet ist.

13. Hydraulische Strecke, vorzugsweise ein Kupplungsbetätigungssystem, bei welcher ein Geberzylinder (4) über eine Druckleitung (8) mit einem Nehmerzylinder (9) verbunden ist, **dadurch gekennzeichnet, dass** in die Druckleitung (8) ein Messadapter (6, 26) zur Bestimmung eines Ausrückweges der hydraulischen Strecke nach mindestens einem der vorhergehenden Ansprüche integriert ist.
